# EUROPEAN PATENT APPLICATION

(11) **EP 1 227 025 A1**
(43) Date of publication of application: **31.07.2002**
(21) Application number: 01101664.9
(22) Date of filing: 29.01.2001
(51) Int. Cl.: B62B 1/12

(54) **Folding collapsible luggage cart**

(71) Applicant: Fang, Chih Chung, Taoyuan Hsien (TW)
(72) Inventor: Fang, Chih Chung, Taoyuan Hsien (TW)
(74) Representative: Casalonga, Axel

(57) **Abstract**

A folding collapsible luggage cart includes a horizontal area-adjustable base frame, two foot members respectively fastened to the base frame and set between a vertical operative position and a horizontal non-operative position, two castors respectively pivoted to the base frame and set between an operative position and a non-operative position, a retractable handle pivoted to the base frame and set between a horizontal position closely attached to the base frame and a vertical position perpendicular to the base frame, and two back support arms bilaterally pivoted to a bracket at the retractable handle and alternatively set between a received position and an extended position. When collapsed, the luggage cart is held in a compact and flat manner conveniently for storage or carrying.

## Description

### BACKGROUND OF THE INVENTION

The present invention relates to a luggage cart and, more specifically, to a folding collapsible luggage cart, which can be received in a flat condition to minimize space occupation when not in use.

Various luggage carts have been disclosed for carrying a luggage, and have appeared on the market. In order to reduce space occupation when not in use, folding collapsible luggage carts are commercially available. A regular folding collapsible luggage cart is generally comprised of a base frame, two wheels bilaterally provided at the rear side of the base frame for enabling the luggage cart to be moved on the floor in a tilted position, a plurality of foot members provided at the front side of the bottom side wall of the base frame for supporting the luggage cart on the floor in a vertical position, and a retractable handle provided at the rear side of the top side wall of the base frame. The retractable handle comprises two fixed sleeves vertically provided at the rear side of the top side wall of the base frame and arranged in parallel, two telescopic handlebars respectively mounted in the fixed sleeves and moved in and out of the fixed sleeves between a received position and an extended position, a transverse handgrip connected between the telescopic handlebars at the top side and disposed outside the fixed sleeves, and a control bar coupled between the fixed sleeves and controlled to unlock the telescopic handlebars for enabling the telescopic handlebars to be moved in and out of the fixed sleeves between the extended position and the received position. This structure of folding collapsible luggage cart is still not satisfactory in function. The drawbacks of this structure of folding collapsible luggage cart are numerous and outlined hereinafter.
1. Because the wheels are not collapsible, the folding collapsible luggage cart has a certain height when collapsed, i.e., the folding collapsible luggage cart cannot be arranged into a flat manner when folded up.
2. Because the foot members are plugged into respective mounting holes of the base frame, they cannot firmly support the luggage cart on the floor without causing vibration when carrying a heavy load.
3. When carrying several pieces of luggage over an uneven road surface, the luggage may fall from the base frame.

### SUMMARY OF THE INVENTION

The present invention has been accomplished to provide a folding collapsible luggage cart, which eliminates the aforesaid drawbacks. It is one object of the present invention to provide a folding collapsible luggage cart, which provides an extended bearing area to support the load stably. It is another object of the present invention to provide a folding collapsible luggage cart, which requires less storage space and can be carried in a small bag when collapsed. According to one aspect of the present invention, the folding collapsible luggage cart comprises a base frame equipped with two rear castors, two front foot members, and a top retractable handle. The base frame comprises a main bearing plate and two adjustment plates horizontally slidably coupled to the main bearing plate at two sides and set between a received position and an extended position subject to the amount and size of the luggage to be carried. According to another aspect of the present invention, the two foot members are respectively fastened to the adjustment plates and set between a vertical operative position and a horizontal non-operative position, and the two castors are respectively pivoted to the adjustment plates and set between an operative position and a non-operative position. According to still another aspect of the present invention, the adjustment plates each have a front countersunk mounting hole and crossed locating grooves disposed at the front side across the respective front countersunk mounting hole, and the foot members each have a locating flange respectively engaged into the front countersunk mounting holes of the adjustment plates, a through hole respectively fastened to the front countersunk mounting holes of the adjustment plates by a respective screw, and two locating positioning blocks aligned at two sides of the locating flange and adapted for engaging the crossed locating grooves of the adjustment plates respectively. According to still another aspect of the present invention, the retractable handle is pivoted to the main bearing plate and alternatively set between a horizontal position closely attached to the main bearing plate and a vertical position perpendicular to the main bearing plate. According to still another aspect of the present invention, a bracket is fixedly fastened to the sleeve of the retractable handle, and two back support arms bilaterally pivoted to two the bracket and alternatively set between a received position closely attached to the sleeve of the retractable handle and an extended position horizontally aligned for the mounting of an elastic band to secure the loaded luggage in place.

### BRIEF DESCRIPTIONN OF THE DRAWINGS

FIG. 1 is an elevational view of a folding collapsible luggage cart according to the present invention.

FIG. 2 is an exploded view of the folding collapsible luggage cart according to the present invention.

FIG. 3 is a sectional view of a part of the present invention, showing the adjustment plate of the base frame set in the extended position.

FIG. 4 is a sectional view of a part of the present invention, showing the adjustment plate of the base frame set in the received position.

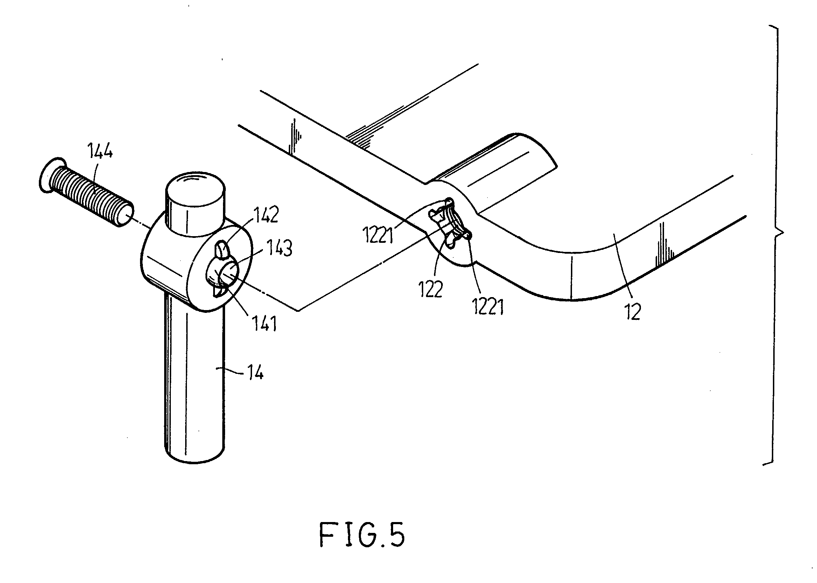

FIG. 5 is an exploded view in an enlarged scale of a part of the present invention, showing the structure of the foot member.

FIG. 6 illustrates the foot member set in the operative position according to the present invention.

FIG. 7 illustrates the foot member set in the non-operative position according to the present invention.

FIG. 8 illustrates the castor set in the operative position according to the present invention.

FIG. 9 illustrates the castor set in the non-operative position.

FIG. 10 illustrates the retractable handle set in the working position.

FIG. 11 illustrates the retractable handle set in the non-working position.

FIG. 12 illustrates the back support arms set in the received position.

FIG. 13 illustrates the back support arms set in the extended position.

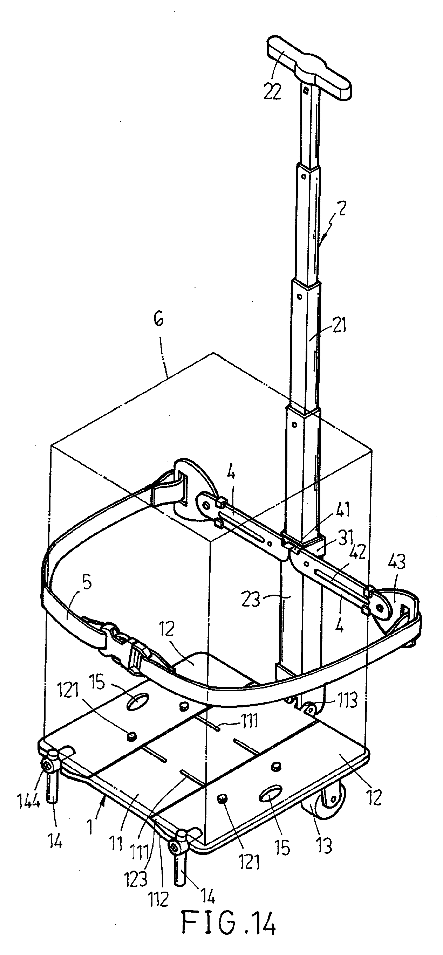

FIG. 14 is an applied view of the present invention, showing a luggage carried on the folding collapsible luggage cart, and an elastic band fastened to the back support arms over the luggage.

FIG. 15 illustrates the folding collapsible luggage cart collapsed.

### DETAILED DESCRIPTION OF THE PREFERRED EMBODIMENT

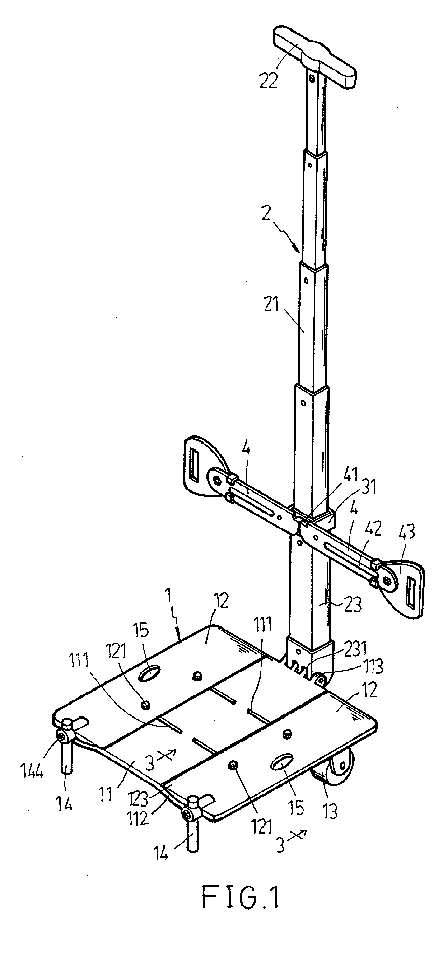

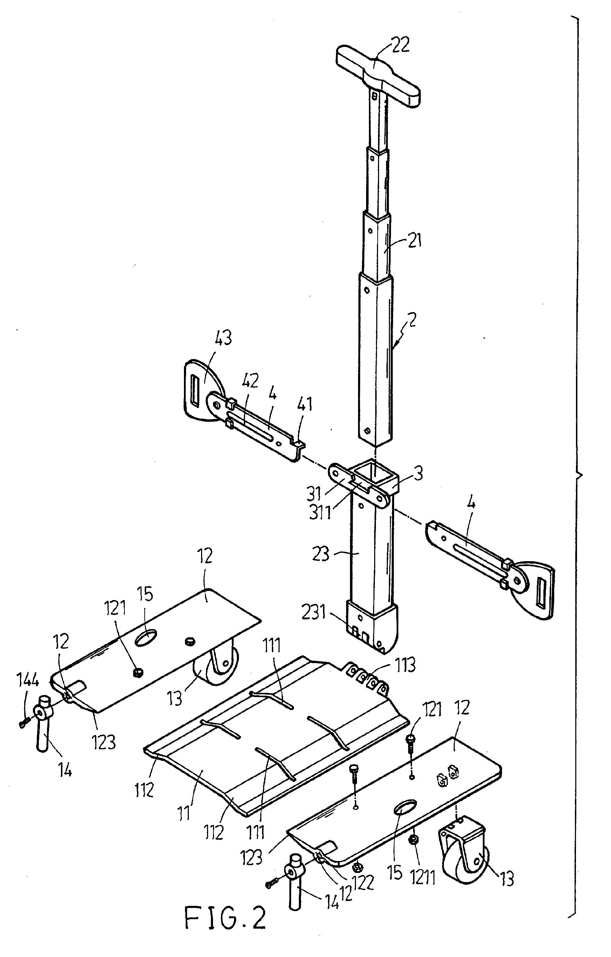

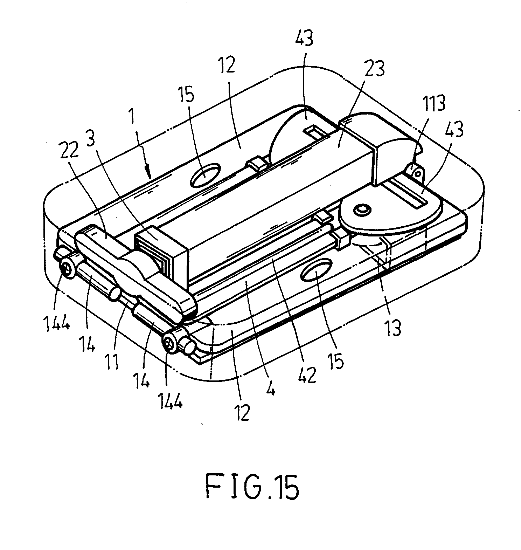

Referring to FIGS. 1, 2 and 15, a folding collapsible luggage cart in accordance with the present invention can be set between the extended position shown in FIG. 1 and the received position shown in FIG. 15. The folding collapsible luggage cart is generally comprised of base frame **1,** a retractable handle **2,** a bracket **3,** and two back support arms **4.**

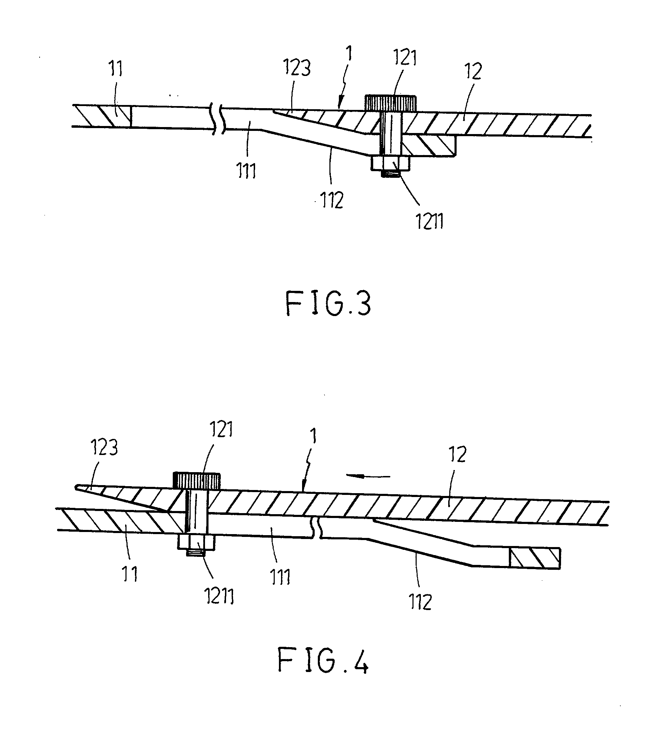

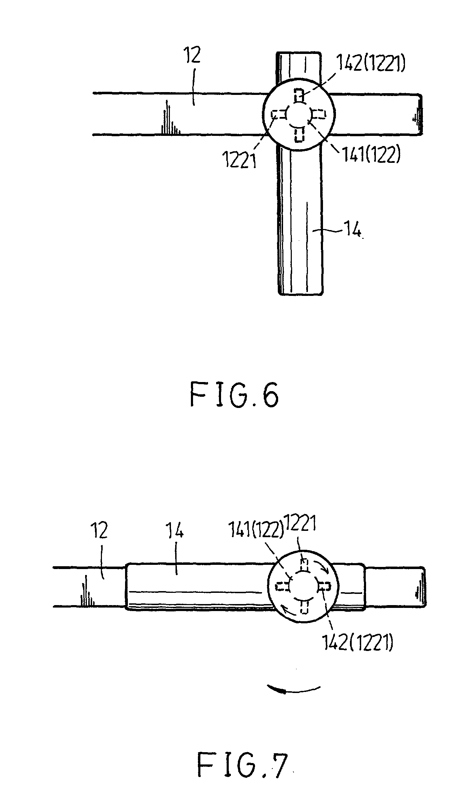

Referring to FIGS. 3 and 4 and FIG. 2 again, the base frame **1** comprises a main bearing plate **11,** and two adjustment plates **12.** The main bearing plate **11** comprises a knuckle unit **113** disposed at the rear side thereof, two longitudinal guide slopes **112** disposed near two lateral sides thereof and arranged in parallel, and two pairs of transverse sliding slots **111** respectively extended through the guide slopes **112** and arranged in parallel. The adjustment plates **12** can be moved over the guide slopes **112** and supported on the main bearing plate **11** between a first position (the extended position) shown in FIG. 3 and a second position (the received position) shown in FIG. 4, each comprising two downward bolts **121** respectively slidably fastened to the transverse sliding slots **111** of the main bearing plate **11** by a respective nut **1211,** a hand hole **15** for the holding of the hand to move the respective adjustment plate **12** relative to main bearing plate **11** between the extended position and the received position, a beveled bottom edge **123** fitting one slope **112** of the main bearing plate **11,** and a front countersunk mounting hole **122.** Two foot members **14** are respectively fastened to the front countersunk mounting holes **122** of the adjustment plates **12** by a respective screw **144.** Each foot member **14** comprises a transverse through hole **143,** a flange **141** disposed at one side near the top, a transverse through hole **143** extended through the center of the flange **141** for the passing of the respective screw **144,** and two positioning blocks **142** aligned at two sides of the flange **141.** The positioning blocks **142** can be coupled to horizontally aligned or vertically aligned grooves of respective crossed grooves **1221,** which are provided at the front side of the adjustment plates **12** across the front countersunk mounting hole **122,** so as to hold the respective foot member **14** in the operative position shown in FIG. 6, or the non-operative position shown in FIG. 7.

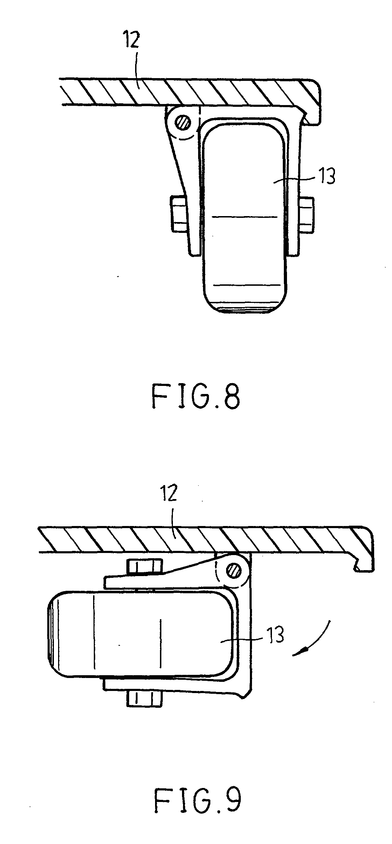

Referring to FIGS. 8 and 9 and FIG. 2 again, the adjustment plates **12** are respectively equipped with a castor **13.** The castors **13** are respectively hinged to the adjustment plates **12,** and can be set between the operative position shown in FIG. 8, and the non-operative position shown in FIG. 9.

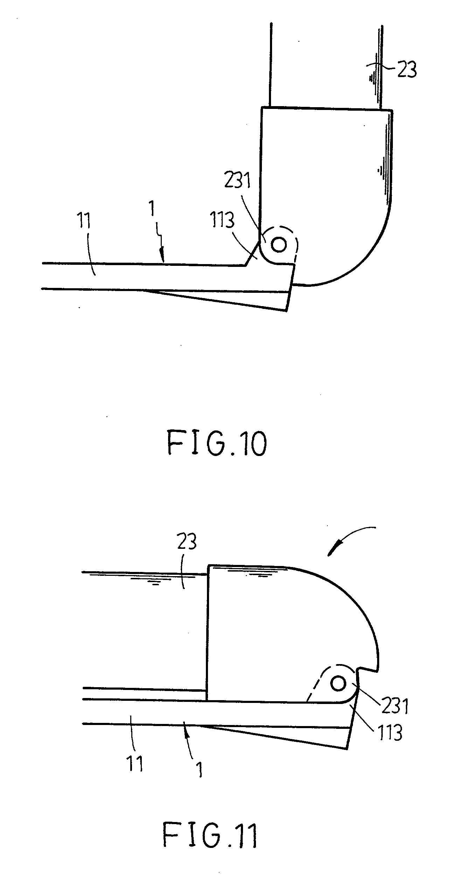

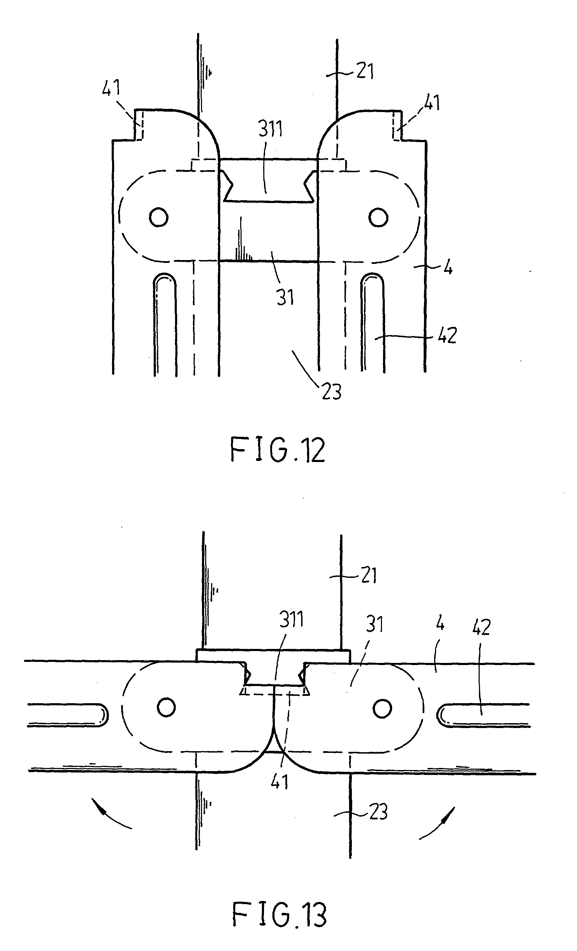

Referring to FIGS. 10 and 11 and FIG. 2 again, the retractable handle **2** comprises a sleeve **23,** a telescopic handle body **21** moved in and out of the sleeve **23** between the extended position and the received position, and a handgrip **22** provided at the top side of the telescopic handle body **21.** The sleeve **23** comprises a bottom knuckle unit **231** pivoted to the knuckle unit **113** of the main bearing plate **11,** for enabling the retractable handle **2** to be alternatively set between the working position shown in FIG. 10 and the non-working position shown in FIG. 11.

Referring to FIGS. from 12 through 14, the bracket **3** is fixedly fastened to the sleeve **23** of the retractable handle **2,** comprising a horizontal connecting plate **31.** The connecting plate **31** has a dovetail groove **311** on the middle of the topside thereof. The back support arms **4** are respectively pivoted to the horizontal connecting plate **31** at two sides, and alternatively set between the received position shown in FIG. 12 where the back support arms **4** are closely attached to the sleeve **23** of the retractable handle **2,** and the extended position shown in FIG. 13 where the back support arms **4** are horizontally aligned. The back support arms **4** each comprise a locating rod **41,** which is engaged into the dovetail groove **311** of the horizontal connecting plate **31** to hold the respective back support arm **4** in the extended position when the back support bars **4** are turned outwards, a reinforcing rib **42,** which reinforces the structural strength of the respective back support arm **4,** and an eyelet plate **43** for the mounting of an elastic band **5** adapted to secure the luggage **6** to the luggage cart.

While only one embodiment of the present invention has been shown and described, it will be understood that various modifications and changes could be made thereunto without departing from the spirit and scope of the invention disclosed.

## Claims

1. A folding collapsible luggage cart comprising:
a base frame, said base frame comprising a main bearing plate, said main bearing plate comprising two longitudinal guide slopes disposed near two opposite lateral sides thereof, and two parallel pairs of transverse sliding slots extended across said sliding slots, two adjustment plates respectively coupled to said main bearing plate at two sides and moved over said guide slopes between a received position and an extended position, said adjustment plates each comprising two downward coupling bolts respectively slidably fastened to the transverse sliding slots of said main bearing plate by a respective nut, and a front countersunk mounting hole;
two foot members respectively fastened to the mounting hole of said adjustment plates;
two castors respectively pivoted to said adjustment plate and alternatively set between an operative position and a non-operative position;
a retractable handle pivoted to said main bearing plate and alternatively set between a horizontal position closely attached to said main bearing plate and a vertical position perpendicular to said main bearing plate, said retractable handle comprising a sleeve, said sleeve comprising a bottom knuckle unit pivoted to the knuckle unit of said main bearing plate, a telescopic handle body mounted in said sleeve and alternatively set between a received position and an extended position, and a handgrip fixedly fastened to one end of said telescopic handle body outside said sleeve;
a bracket fixedly fastened to the sleeve of said retractable handle, said bracket comprising a horizontal connecting plate, said horizontal connecting plate comprising a dovetail groove disposed on the middle of a topside thereof;
two back support arms bilaterally pivoted to two distal ends of said horizontal connecting plate of said bracket and alternatively set between a received position where said back support arms are closely attached to said sleeve of said retractable handle, and an extended position where said back support arms are horizontally aligned, said back support arms each comprising a locating rod, which is engaged into the dovetail groove of said horizontal connecting plate of said bracket to hold said back support arms in the extended position when said back support arms are respectively turned outwards.

2. The folding collapsible luggage cart of claim 1, wherein said adjustment plates each comprise two crossed locating grooves disposed across the respective front countersunk mounting hole for holding the respective foot member between an operative position and a non-operative position, and said foot members each comprise a locating flange adapted for engaging the front countersunk mounting hole of said adjustment plates, a through hole respectively connected to the front countersunk mounting holes of said adjustment plates by a respective screw, and two positioning blocks aligned at two sides of said locating flange and adapted for engaging the crossed locating grooves of said adjustment plates between a horizontal position and a vertical position.

3. The folding collapsible luggage cart of claim 1, wherein said back support arms each comprise an eyelet plate at one end remote from said bracket for the mounting of an elastic band adapted to secure a luggage to the luggage cart.
